# EUROPÄISCHE PATENTSCHRIFT

(11) **EP 2 460 058 B1**
(45) Veröffentlichungstag und Bekanntmachung des Hinweises auf die Patenterteilung: **01.05.2013**
(21) Anmeldenummer: 09748211.1
(22) Anmeldetag: 03.09.2009
(51) Int. Cl.: G05D 1/02, E04H 4/16, B25J 13/08

(54) **VERFAHREN UND ANORDNUNG ZUR STEUERUNG EINES ROBOTERS ANHAND EINES OBJEKTES**
METHOD AND ARRANGEMENT FOR CONTROLLING A ROBOT ON THE BASIS OF AN OBJECT
PROCÉDÉ ET SYSTÈME POUR LA COMMANDE D'UN ROBOT À L'AIDE D'UN OBJET

(30) Priorität: 03.09.2008 DE 102008045884
(43) Veröffentlichungstag der Anmeldung: 06.06.2012
(73) Patentinhaber: Fraunhofer-Gesellschaft zur Förderung der angewandten Forschung e.V., 80686 München (DE)
(72) Erfinder: BRAND, Michael, 09518 Großrückerswalde (DE); LAUSCH, Holger, 07743 Jena (DE); WERNER, Christoph, 07743 Jena (DE)
(74) Vertreter: Oehmke, Volker
(86) Internationale Anmeldenummer: PCT/DE2009/001248
(87) Internationale Veröffentlichungsnummer: WO 2010/025714

(56) Entgegenhaltungen:
- EP-A2- 1 647 465
- DE-A1- 3 726 850
- FR-A1- 2 564 615
- US-A- 5 187 664
- US-B1- 6 289 269

## Beschreibung

Die Erfindung betrifft ein Verfahren und eine Anordnung zur Steuerung eines Roboters, insbesondere eines Reinigungs-, Inspektions-, Mess- oder Transportroboters, anhand eines Objektes, in dem sich nicht sichtbare magnetische Teile in unveränderlicher Lage befinden. Die Steuerung beinhaltet sowohl die Bestimmung der Lage des Roboters als auch die Steuerung seiner Bewegungen.

Das Dokument DE 3726850 A1 offenbart ein Verfahren nach dem Oberbegriff des Anspruchs 1 und ein Anordnung nach dem Oberbegriff des Anspruchs 5.

Zum Reinigen von Schwimmbecken werden schnurgebundene Reinigungssysteme eingesetzt, die mehr oder weniger autonom nach vorgefertigten Programmroutinen und mit Tast- und anderen Sensoren arbeiten. Der Antrieb unter Wasser erfolgt über Schrittmotoren bzw. odometriegesteuerte Raupen-, Räder- oder Walzenantriebe. Dabei treten besonders bei nicht ebenen Beckenbegrenzungen, bei langen Fahrstrecken sowie bei integrierter Beckenwandreinigung mit vertikalem Verfahrweg häufig mehr oder weniger große Abweichungen vom programmierten horizontalen Verfahrweg einschließlich des Versatzes in den Umkehrlagen des Reinigungsroboters auf, die eine exakte Arbeitsweise zumindest behindern und Nacharbeiten erforderlich machen. Zur Verhinderung bzw. Korrektur solcher Fahrtrichtungsabweichungen sind bereits elektronische Kompasse in die Robotersysteme integriert und die Kompassanzeigen mittels Odometrie zur Richtungskorrektur benutzt worden. Die elektronischen Kompasse orientieren sich zwar am Erdmagnetfeld, jedoch wird dieses Magnetfeld durch in der Nähe befindliche ferromagnetische bzw. magnetisierbare Objekte sowie durch unter Spannung und unter Stromfluss stehende elektrische Leitungen und Verbraucher über den Verfahrweg örtlich unterschiedlich verzerrt.

Eine andere Möglichkeit der Detektion des genauen Verfahrweges und damit zur Richtungskorrektur für ein Robotersystem ist durch die Anwendung eines GPS-basierten Navigationssystems gegeben. Dies hat gleichzeitig den Vorteil, dass das Robotersystem bei Betriebsstörungen bzw. Unterbrechungen im Abfahren den Ort wieder findet, den es bei der Unterbrechung innehatte und das Abfahren exakt fortgesetzt werden kann. Nachteilig ist hierbei jedoch, dass die Satellitensignale an allen Orten sowie über und unter Wasser nicht ausreichend zur Verfügung stehen und dass der zu betreibende technische Aufwand sehr groß ist. Schließlich sind mit dem GPS-System Höhen- und Tiefenunterschiede im Fahrweg auf dem Beckenboden schlecht erfassbar und rationell durchführbar.

Ferner können zur Detektion des Fahrweges bzw. des Versatzes des Robotersystems in den Umkehrlagen elektronische Markierungen im zu reinigenden Bauwerk/Becken vorgesehen sein, die ggf. nachträglich angebracht werden müssen. Abgesehen davon, dass auch für diese technische Lösung die Unterwassersituation erschwerend ist, muss, funktionell bedingt, ein dichtes Rasternetz von Markierungen angebracht werden.

Zur Vermeidung der aufgezeigten Nachteile und Mängel des Standes der Technik geht die Erfindung einen anderen Weg. Sie benutzt die ohnehin in den Objekten bzw. Bauwerken enthaltenen aber unzugänglichen bzw. ohne Hilfsmittel nicht sichtbaren magnetischen/magnetisierbaren Teile (Armierung) und ein in diesen generiertes Gesamtstreufeld zur Steuerung des Roboters. Dabei ermöglicht sie gleichzeitig die Vermessung dieser Teile. Die Erfindung wird durch die kennzeichnenden Merkmale des ersten Patentanspruchs definiert und durch die Merkmale der Unteransprüche präzisiert, die vorteilhafte Weiterbildungen und Realisierungsmöglichkeiten enthalten.

Dabei umfasst das erfindungsgemäße Verfahren nacheinander die folgenden Verfahrensstufen: Es wird ein zyklisch veränderliches Primärmagnetfeld erzeugt, das zu Messungszwecken innerhalb eines Messungszyklus mindestens zwei entgegengesetzte Feldrichtungen aufweist und das zusammen mit einem magnetischen Hintergrundfeld auf die magnetischen Teile einwirkt und in diesen magnetische Streufelder erzeugt, die sich zu einem Gesamtstreufeld überlagern. Dieses Gesamtstreufeld wird vom Hintergrundfeld durch Differenzbildung separiert und ausgewertet. Die magnetischen Teile werden detektiert und hinsichtlich ihrer Anzahl, Form, Größe, Lage und Orientierung vermessen. Die so gewonnenen Messwerte werden analysiert und auf der Grundlage dieser Analyse Steuerdaten für den Roboter ermittelt und diesem mitgeteilt.

Zur Durchführung dieses Verfahrens wird eine Anordnung verwendet, bei der ein Roboter mit mindestens einem Primärmagnetfeldgeber fest verbunden ist, in dessen Magnetfeld sich die magnetischen Teile befinden und zur Erzeugung von magnetischen Streufeldern angeregt werden. Der Roboter ist weiterhin mit mindestens einem magnetischen Sensor zur Aufnahme der Streufeldsignale und mindestens einer Steuereinheit zur Ansteuerung von Primärmagnetfeldgeber und Sensor fest verbunden. Dem Roboter sind nacheinander zugeordnet:
Ein Signalverarbeitungsmodul für die Separierung der Streufelder von den Hintergrundfeldern sowie für die Detektion und Vermessung der magnetischen Teile,
ein Vergleichsmodul zur Auswertung und zum Soll-Ist-Vergleich von Streufeldsignalen und/oder Hintergrundfeldsignalen und/oder externen Sensorsignalen zur Ortung und Orientierungsbestimmung,
ein Datenverarbeitungsmodul zur Generierung von Daten für die Robotersteuerung aus den Ortungs- und Orientierungsdaten,
ein Steuermodul zur Initiierung der Roboteraktionen entsprechend den Daten aus dem Datenverarbeitungsmodul.

In ihren Einzelheiten wird die Erfindung nachstehend anhand der schematischen Zeichnungen näher beschrieben. Dabei zeigen:
- Fig. 1: einen Ablaufplan des erfindungsgemäßen Verfahrens,
- Fig. 2: ein Blockschaltbild einer Anordnung zur Durchführung des erfindungsgemäßen Verfahrens in Verbindung mit dem im Verfahren stattfindenden Signalfluss,
- Fig. 3: eine erfindungsgemäße Roboteranwendung,
- Fig. 4: einen als Spule ausgebildeten Primärmagnetfeldgeber und
- Fig. 5: einen als Permanentmagnet gestalteten Primärmagnetfeldgeber.

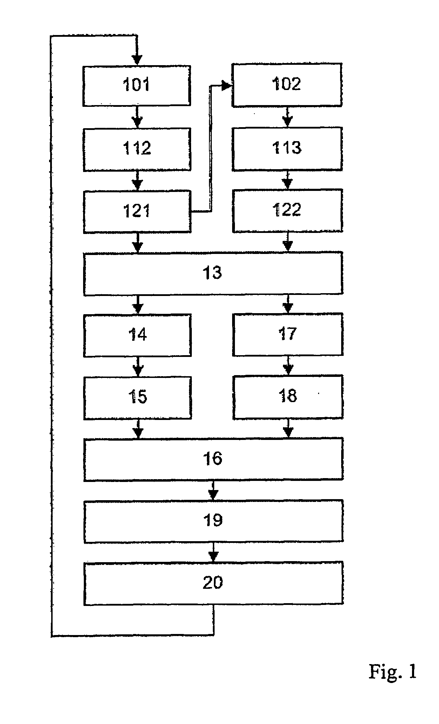

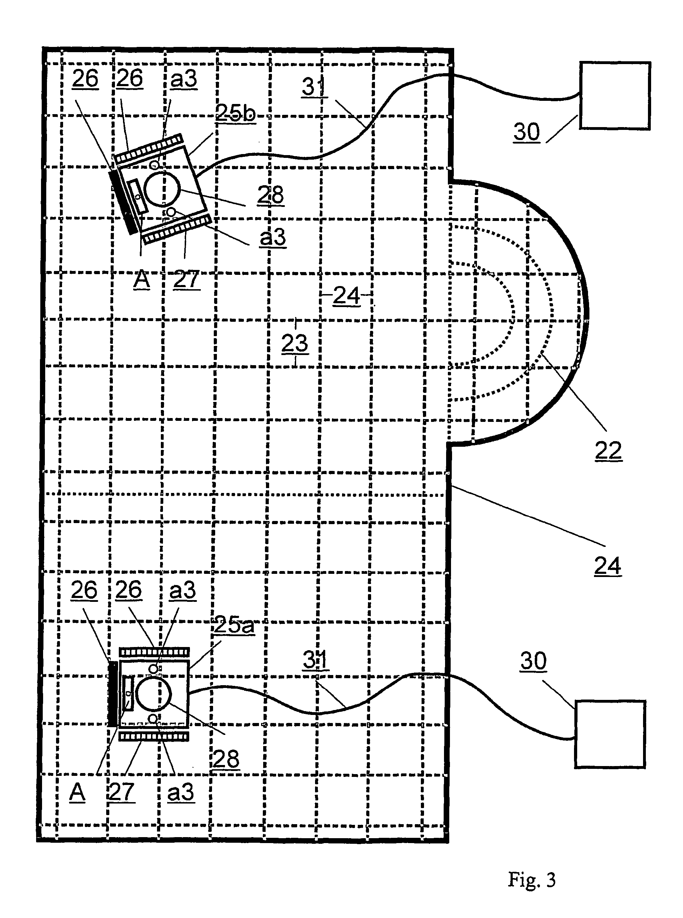

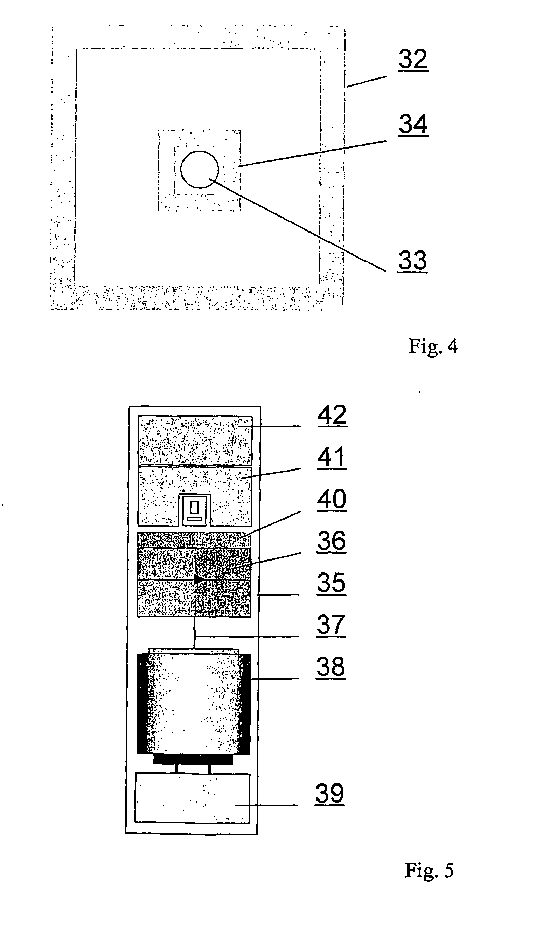

Gemäß Fig. 1 wird zur Navigation in einem ersten Verfahrensschritt 10 mit Hilfe eines Primärmagnetfeldgebers ein Primärmagnetfeld zyklisch erzeugt, und in jedem Zyklus ein positives Teilfeld 101 und ein negatives Teilfeld 102 erzeugt. Dieses Primärfeld kann im Hinblick auf Fig. 4 ein Wechselfeld und im Hinblick auf Fig. 5 ein Drehfeld sein. Den Teilfeldern entsprechend findet eine positive 111 und eine negative Aufmagnetisierung 112 der magnetisierbaren Teile eines Objektes (siehe Fig. 3) statt, so dass sie ein positives und ein negatives Streufeld abgeben. Waren die Teile bereits vormagnetisiert, so können sie vor Beginn des erfindungsgemäßen Verfahrens entmagnetisiert werden. Die in das Objekt eingebauten Teile sind in der Regel dem mehr oder weniger deformierten Erdmagnetfeld unterworfen. Das von jedem Teil im Verlauf eines Zyklus abgegebene Gesamtfeld setzt sich also zumindest aus dem Erdfeldeinfluss und dem Primärfeldeinfluss zusammen, wobei die Messung dieses Gesamtfeldes an zwei Stellen 121, 122 erfolgt, die durch entgegengesetzte, um 180° gedrehte Primärmagnetfelder charakterisiert sind. Dabei wird an der Stelle 121 die Summe und an der Stelle 122 die Differenz aus Hintergrundfeld und Streufeld als Gesamtfeld gemessen.

In einem weiteren Verfahrensschritt 13 werden Differenzen aus den Messungen des Gesamtfeldes 121, 122 gebildet und auf diese Weise Streufeld und Hintergrundfeld voneinander getrennt und beide auf getrennten Verfahrenswegen weiterverarbeitet. Der Vorteil dieser zyklisch sich wiederholenden Trennung besteht darin, dass beide magnetischen Felder räumlich und zeitlich exakt erfasst werden und damit Veränderungen, insbesondere des Hintergrundfeldes während der Messung auf diese keinen Einfluss ausüben.

Nach der Separierung von Hintergrundfeld und Streufeld, das in der Regel nicht nur von einem magnetischen Teil herrührt, erfolgt in einem mit 14 bezeichneten Verfahrensschritt die Auswertung des Streufeldes, die statisch angeordneten magnetischen Teile werden detektiert und danach in einer weiteren Verfahrensstufe 15 vermessen. Das heißt, es werden die Abstände der Teile voneinander, ihre Winkelabweichung von der Abfahrrichtung des Roboters, ihre Querschnitte, ihre Tiefe im jeweiligen Objekt usw. bestimmt. Die hierbei gewonnenen Daten, die Ist-Werte darstellen, werden einer Messwertanalyse 16 unterworfen.

In die Messwertanalyse 16 können auch die Auswertung 17 (Kompass- und Lagedaten) des im selben Zyklus separierten Hintergrundfeldes sowie die Erfassung 18 externer bzw. zusätzlicher Sensor- und Steuersignale eingehen. Schließlich kann auch die horizontale und vertikale Obj ektstruktur und die durch sie bedingte Anordnung der magnetischen Teile als Vergleichsmap (Solldaten) in die Messwertanalyse 16 eingegeben werden, mit der die beim Abfahren ermittelten Daten verglichen werden und aus der die Messwertanalyse die Positions-, Orientierungs- und Steuerdaten für den Roboter ermittelt, die in einem weiteren Verfahrensschritt 19 an den Roboter übertragen werden, der dann letztlich die Steuerbefehle in einem Verfahrensschritt 20 ausführt.

Die zu Fig. 1 beschriebene Abfolge der Verfahrensschritte wiederholt sich in jedem Abfahrprozess mit einer Frequenz, die von der Abfahrgeschwindigkeit abhängt, und zwar ist die Frequenz proportional Abfahrgeschwindigkeit. Bspw. sollte bei einer Abfahrgeschwindigkeit von 10 cm/s die Frequenz nicht kleiner als 10 Hz sein.

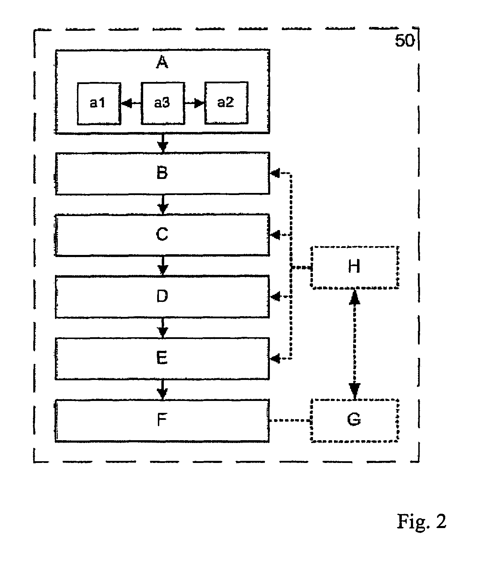

In Fig. 2 umfasst eine erfindungsgemäße Anordnung zur Robotersteuerung 50 ein Erkennungsmodul A, ein Signalverarbeitungsmodul B, ein Vergleichsmodul C, ein Datenverarbeitungsmodul D, ein Steuermodul E für einen Roboter F. Weiterhin kann eine externe Sensorik G mit einem Signalinterface H vorgesehen sein.

Das Erkennungsmodul A dient der Primärdatengenerierung und Magnetfeldmessung und enthält zu diesem Zweck einem Primärmagnetfeldgeber al, einen magnetischen Sensor a2 (bspw. ein dreiachsiges Magnetometer) und eine Steuerelektronik a3, die der Ansteuerung des Primärmagnetfeldgebers al zur Erzeugung eines zyklisch veränderlichen Primärfeldes und des Sensors a2 zur Aufnahme, Formung und Weiterleitung der Signale des Gesamtstreufeldes sowie des Hintergrundmagnetfeldes dient. Das ebenfalls zyklisch sich verändernde magnetische Gesamtstreufeld wird in den sich im Primärfeld befindlichen magnetischen Teilen erzeugt. Die auf diese Weise im Erkennungsmodul für jede Messung am Ort des Sensors kumulierten Magnetfelddaten werden dem Signalverarbeitungsmodul B zugeleitet. Das Signalverarbeitungsmodul B besorgt die Separierung der Streufelder von den Hintergrundfeldern durch Differenzbildung von zwei an durch entgegengesetzte Primärmagnetfelder charakterisierten Messstellen eines Messzyklus gewonnenen Messdaten sowie die Detektion und Vermessung der magnetischen Teile. Die so gewonnenen räumlichgeometrischen und physikalischen Daten der magnetischen Teile und das magnetische Hintergrundprofil werden an das Vergleichsmodul C weitergeleitet.

Im Vergleichsmodul C findet die Auswertung der Daten und ein Soll-Ist-Vergleich von Streufeld- und/oder Hintergrundfeld- und/oder externen Sensorsignalen zur Ortung und Orientierungsbestimmung statt. Hierzu enthält das Vergleichsmodul einen Mapspeicher mit den Sollwerten mit denen die ermittelten Istwerte verglichen werden. Die Sollwerte werden entweder als Plan mit der Verteilung der magnetischen Teile im Objekt eingegeben oder durch eine handgesteuerte Abtastfahrt des Roboters erfasst, kontrolliert und zu einem Orientierungsraster (Map) verarbeitet bzw. aufbereitet. Dabei werden die jeweils konkret notwendige Primärfeldfrequenz/Messmethode, Detektionsrate/Messfrequenz, Samplerate der Signalverarbeitung etc. an die jeweilige Fahrtgeschwindigkeit des Roboters und die jeweilige Gegebenheit der Teileform, -dichte, -tiefe und -struktur angepasst. Die Erfassung der Objektform, Teileverteilung und Teilestruktur in Gestalt eines mindestens zwei- bzw. vorzugsweise dreidimensionalen Orientierungsrasters mit unveränderlichen Merkmalen bildet die Basis für ein optimales Fahrprogramm mit integrierter permanenter Fahrtkontrolle und -korrektur.

Die im Vergleichsmodul C ermittelten Daten werden als Ortungs- und Orientierungsdaten dem Datenverarbeitungsmodul D mitgeteilt, das daraus die Steuerdaten für die Robotersteuerung schafft und diese an das Steuermodul E weitergibt. Das Steuermodul E initiiert die Roboteraktionen, indem es Steuersignale an die Roboteraktorik sendet, und der Roboter F führt die durch das Steuermodul E initiierten Aktionen schließlich aus.

Durch die externe Sensorik G und die zugehörige Schnittstelle H sind weitere bzw. zusätzliche Steuersignale in die erfindungsgemäße Anordnung einführbar, die bspw. die Abfahrgeschwindigkeit, Kipp- und Rutschbewegungen des Roboters F betreffen. Diese Steuersignale können je nach Bedarf in mindesten einem der Module B bis E eingeführt werden und auf diese Weise weitere Aktionen und Korrekturen des Roboters erfolgen.

Während das Erkennungsmodul A und der Roboter F am besten in einer Baueinheit fest verbunden sind, können alle anderen Module und die externe Sensorik und das Signalinterface an getrennten Stellen einzeln oder in geeigneten Kombinationen miteinander angeordnet sein.

In Fig. 3 ist der Grundriss eines Schwimmbeckens 21 dargestellt, das eine Einstiegstreppe 22 und eine aus zueinander rechtwinkligen Eisenstäben 23, 24 bestehende Bodenarmierung aufweist. Im Becken 21 befindet sich ein Säuberungsroboter 25 (a, b), der beidseitig Raupen 26, 27 zum Verfahren und in seinem Zentrum eine Schmutzwasserabführung 28 aufweist. Außerdem sind an ihm ein Erkennungsmodul A mit zwei Magnetsensoren a3 zu beiden Seiten der zentral angeordneten Schmutzwasserabführung 28 und an seinem Vorderteil Stoßfühler 29 vorgesehen. Eine außerhalb des Beckens 21 vorgesehene Baueinheit 30 enthält die Stromversorgung und ebenso eine externe Sensorik G sowie die Module B bis E (Fig. 2). Die Stromversorgung des Säuberungsroboters 25 erfolgt über ein Kabel 31 oder eine in dem Säuberungsroboter 25 integrierte, hier nicht dargestellte Stromquelle. Das Erkennungsmodul A ist mit den Modulen B bis E und der externen Sensorik G ebenfalls über ein Kabel 31 oder über einen hier nicht dargestellten kabellose Datenkanal, bspw. eine Funkstrecke, verbunden. In der dargestellten Stellung 25a ist der Säuberungsroboter exakt zur Armierung 23, 24 und den Beckenrändern ausgerichtet. Die Anordnung zur Robotersteuerung 50 (Fig. 2) hält ihn durch den ständigen Vergleich der aktuellen magnetischen Messdaten mit den Solldaten im Mapspeicher des Vergleichsmoduls C in der erforderlichen Richtung und Bewegung, auch bei seinem Wenden und Versetzen am Beckenrand am Ende einer Fahrstrecke.

Über den Mapspeicher des Vergleichsmodul C weiß der Roboter F (Fig. 2) selbständig, welche Bereiche er bereits abgefahren hat, wo er gerade ist und welche Bereiche noch abgefahren werden müssen. Wird oder muss die Fahrt durch irgendwelche bspw. reinigungsbedingte Prozesse unterbrochen werden, kann der Roboter problemlos aus dem Becken 21 herausgenommen werden. Beim Wiedereinsetzen des Roboters in die Lage 25b wird dieser bspw. schräg in eine ihm nicht bekannte Position gebracht. Der Roboter erfasst sofort die Schräglage zur Bewehrungsstruktur und kann sie sofort korrigieren. Zugleich erkennt er über die Kompassfunktion seine weitere mögliche Ausrichtung zu einem oder mehreren Beckenrändern in seiner gespeicherten Map. Über die korrigierte Position zu einer durch einen nächstliegenden Bewehrungsstab gegebenen Bewehrungsachse kann er sich über eine Orientierungsachse entweder längs entlang oder schräg direkt zum jeweiligen Beckenrand begeben. Hat er den Beckenrand erreicht, richtet er sich an diesem aus und fährt nun den jeweiligen geraden, eckigen bzw. runden Beckenrand ab und vergleicht die detektierte Bewehrungsstruktur mit seiner gespeicherten Map. Reicht diese Information aufgrund einer eher unwahrscheinlichen absolut gleichen Beckenrandbewehrungsstruktur nicht aus, kann er die Ausrichtung zum herausgerechneten Erdmagnetfeld als Hintergrundfeld zur weiteren Orientierung benutzen. Zusätzlich kann z. B. zur eindeutigen Identifizierung von Ecken und spezifischen Beckenbegrenzungen über interne und/oder externe Sensoren geprüft werden, ob nach Erreichen des Beckenrandes eine Links- oder Rechtsdrehung möglich ist. Die Erkennbarkeit der nachfolgenden Linksoder Rechtsdrehung, bzw. der Fahrtkorrektur allgemein, erfolgt wie oben beschrieben. Zugleich erkennt der Roboter Höhen- bzw. Tiefenänderungen sowie Schräglagen während seiner Fahrt.

Auf diese Weise findet der Säuberungsroboter durch die Beckenrandfahrt relativ zügig und direkt seine letzte Bewehrungsachse und kann den letzten Positionspunkt genau wiedererkennen sowie seine Fahrt dort programmgesteuert fortsetzen. Weist seine Map irgendeine oder mehrere unveränderliche besondere Bewehrungssituationen (Endstücke, U-Eisen etc.), detektierbare Versorgungsleitungen, Leitungsanschlüsse oder Hintergrundfeldanomalien aus, kann er auch diese zur Orientierung direkt benutzen. Die mit der Map abgleichbaren Bewehrungs- und Beckenstrukturen sowie die Ausrichtbarkeit am ebenfalls gemapten Hintergrundfeld sowie die Höhen-/Tiefen- und Schräglagenerkennung ermöglichen eine eindeutige Orientierung und Navigation des Roboters im Beckenbereich. Die Orientierung/Navigation kann natürlich wesentlich vereinfacht werden, wenn der Roboter immer wieder in einem gleichen Beckenrasterbereich eingesetzt wird.

Da Säuberungsroboter in den meisten Fällen zumindest über die Energieversorgung fest mit einer äußeren Basisstation verbunden sind, kann auch deren Position zur Orientierung/Navigation des Roboters über weitere, ergänzende technische Hilfsmittel benutzt werden. Auch diese Basisstation kann sich an der Bewehrung des Beckenrandes etc. mittels eines Ortungsverfahrens mit entsprechender Anordnung orientieren. Auch Kombinationen mit GPS und anderen Orientierungs/Navigationsverfahren - ergänzend, kontrollierend, verifizierend etc. - sind möglich.

Zur Erzeugung magnetischer Primärfelder können sowohl stromdurchflossene elektrische Spulen als auch Permanentmagnete zur Anwendung kommen.

In Fig. 4 ist eine wechselstromdurchflossene Primärfeldgeberspule 32 dargestellt, die ein magnetisches Wechselfeld als Primärfeld erzeugt, welches die magnetischen Teile in einem Objekt (nicht dargestellt) im Primärfeldbereich auf-, um- und ggf. abmagnetisiert. Die von den magnetischen Teilen ausgehenden unterschiedlichen Streufelder werden durch mindestens einen magnetischen Sensor 33 in Gestalt eines vorzugsweise dreiachsigen Magnetometers gemessen. Dieses Magnetometer befindet sich im Zentrum der Primärfeldgeberspule 32. Dabei werden die jeweiligen, aus entgegengesetzten primären Wechselfeldern bzw. Drehfeldwinkelstellungen resultierenden Streufelder gemessen. Über Differenzrechnungen kann das jeweilige resultierende Streufeld ermittelt, das Hintergrundfeld herausgerechnet und letzteres auch separat berechnet werden.

Die von den auf- und ummagnetisierten Teilen ausgehenden Streufelder können sowohl als remanente Streufelder nach Abschaltung des aktiven Primärfeldes sowie auch als aktive Streufelder bei geschalteten Primärfeld gemessen werden. Für die aktive Streufeldmessungen muss dem Magnetometer 33 eine geeignete Kompensationseinheit 34, im vorliegenden Fall eine wechselstromdurchflossene Spule, zugeordnet werden, die am Ort des Sensors das Primärfeld durch ein gleich großes Gegenfeld kompensiert, so dass nur das von den auf- und ummagnetisierten Teilen ausgehende aktive Streufeld gemessen wird. Die Vorteile der aktiven Streufeldmessung liegen in den wesentlich größeren Streufeldsignalen und der damit größeren Detektionsreichweite bzw. -tiefe sowie dem zugleich wegfallenden Einfluss eventueller Vormagnetisierungen auf die auf- und ummagnetisierten Bewehrungselemente.

Der störende Einfluss von etwaigen Vormagnetisierungen der magnetischen Teile bei deren Auf- und Ummagnetisierung kann durch vorherige Entmagnetisierungsfahrt des Roboters mit örtlich oder zeitlich abklingenden Wechselfeldem beseitigt werden. Prinzipiell können auch mehrere spulenbasierte Feldgebereinheiten jeweils mit und/oder ohne Streufeldmesseinheit räumlich getrennt oder nicht getrennt mit- bzw. nacheinander in einer Robotereinheit gekoppelt sein.

Der Einfluss etwaiger Vormagnetisierungen wirkt sich bei der remanenten Streufeldmessung allerdings nur bei der Tiefen- und Querschnittsermittlung sowie bei der Mehrlagenbestimmung aus. Für die reine Positionsbestimmung ist sie unerheblich.

In Fig. 5 ist in einem Gehäuse 35 ein Permanentmagnet 36 drehbar angeordnet, der auf der Rotationsachse 37 eines Elektromotors 38 sitzt, der von einer Energiequelle 39 gespeist wird. Der Permanentmagnet 36 ist symmetrisch zur Achse 37 polarisiert und auf seiner dem Elektromotor 38 abgewandten Seite mit einer Kompensationseinheit 40 starr verbunden, die einen fest angeordneten Magnetfeldsensor 41 umgibt, der seine Signale an eine Steuerelektronik 42 abgibt. Der Magnetfeldsensor 41 muss sehr genau in der Kompensationseinheit 40 fixiert sein. Beide sind rotationssymmetrisch zur Achse 37 angeordnet. Der Permanentmagnet 36 erzeugt ein sich drehendes Primärmagnetfeld, in dem nicht dargestellte magnetische oder magnetisierbare Teile angeordnet sind. Dadurch werden in diesen Teilen magnetische Streufelder erzeugt, die mit dem Magnetfeldsensor 41 gemessen werden.

Beim spulen- und rotomagnetisch basierten Ortungsverfahren werden beim aktiven wie auch beim remanenten Streufeld kontinuierlich die von den auf- und ummagnetisierten Teilen (Bewehrungselemente) ausgehenden Streufeldsignale auf der x- bzw. y- bzw. z-Achse eines kartesischen Koordinatensystems gemessen.

In beiden Fällen arbeitet das Verfahren sowohl im Stand- wie auch Fahrbetrieb des Roboters. Je nach Verfahrrichtung des Roboters mit seiner Ortungseinheit (Erkennungseinheit A, Fig. 2) quer, längs oder unterschiedlich schräg zu den Bewehrungselementen werden diese vom jeweiligen Primärfeldgeber und den jeweils auf sie wirkenden alternierenden bzw. drehenden Primärfeldern vertikal bzw. horizontal quer oder längs auf- bzw. ummagnetisiert.

Das alternierend wechselnde bzw. rotierende Primärfeld (Wechsel/Drehfeld) führt beim Verfahren über den Teilen zu am Sensorort messbaren, wandernden bzw. sich verschiebenden bzw. sich umkehrenden Polbildungen (Quer- und Längsaufmagnetisierungen) im bzw. auf dem jeweiligen Messobjekt je nach Position und Abstand eines Teiles zum Feldgeber.

Die Position und Lage der Teile zur Verfahrrichtung kann über die jeweiligen Nulldurchgänge des Streufeldsignales auf der x- bzw. y- bzw. z-Achse eindeutig bestimmt werden. Darüber sind zugleich die Abstände zwischen den Bewehrungselementen messbar, wenn das Verfahren durch odometrische Sensoren räumlich erfasst wird.

Die beim rotomagnetischen Verfahren entstehenden sogenannten "Wanderpole" führen bei vertikaler, horizontaler, frontaler sowie auch bei Zwischenlagen zu sehr spezifischen und zuordenbaren Messverläufen des Objektstreufeldes, je nach Lage, Position und Abstand des Objektes zum fixen Feldsensor am Ort sowie zur Rotationsachse und Rotationswinkelstellungen des diametral aufmagnetisierten rotierenden und somit variablen Drehfeldgebers.

Es entstehen räumlich und zeitlich veränderliche und messbare Polbildungen, -verschiebungen und -wechsel entsprechend der ebenfalls räumlich und zeitlich form- und lageabhängigen Verlaufsposition des Messobjektes (Teiles) zur Feldgebereinheit (Primärmagnetfeldgeber al, Fig. 2) und Streufeldmesseinheit (Sensor a2, Fig. 2).

Die Messverläufe lassen somit nicht nur eindeutige Rückschlüsse auf die entsprechenden räumlich-zeitlichen Bewegungsverläufe des Roboters bezüglich des Messobjektes oder auch des Messobjekts selbst, sondern auch auf dessen räumliche Form und Aufeinanderfolge als wiedererkennbare Strukturen zu.

Die für die Diskriminierung des reinen Objektstreufeldes vom Hintergrundfeld benutzte Differenzfeldmethode für jeweils entgegengesetzte Primärfelder erlaubt zugleich die kontinuierliche Messung und Bestimmung des aktuellen Hintergrundfeldes auf der x-bzw. y- bzw. z-Achse des Magnetometers über den Verfahrweg. Damit erfasst das Ortungsverfahren zugleich die räumlich-zeitlichen Änderungen des Hintergrundfeldes. Im Gegensatz zum elektronischen Kompass ohne Einsatz eines alternierenden Wechsel-/Drehfeldes mit Differenzfeldmethode, der das jeweilige Erdmagnetfeld als ein durch wechselnde Teile (Bewehrungselemente) unterschiedlich verzerrtes, undifferenzierbares, komplexes Hintergrundfeld misst, ermöglicht dieses Ortungsverfahren zwei wesentliche zusätzliche Vorteile:
1. Es gewährleistet eine orientierende Kompassfunktionalität, die frei gemacht werden ist von den Verzerrungen des Erdmagnetfeldes durch die jeweils unterschiedlichen Bewehrungselemente oder durch die entmagnetisierende Wirkung des Feldgebers.
2. Es ermöglicht die Erkennung der realen seitlichen, horizontalen bzw. vertikalen Verkippungen des Roboters zum Hintergrundfeld (Erdmagnetfeld) beim Verfahren.

Die Kopplung mit der Schrittmotorensteuerung und Odometrie (Steuermodul E, Fig. 2) sowie den wegaufnehmenden Sensoren im Antriebssystem ermöglicht auch das sofortige Erkennen von horizontalen und/oder vertikalen Verrutschungen des Roboters, besonders bei geneigten horizontalen Verfahrwegen, z.B. bei Höhen/Tiefenunterschieden im Schwimmbecken 21 (Fig.3) sowie bei vertikalen Verfahrwegen an der Beckenseitenwand.

Damit erfüllt das mit den externen Sensoren koppelbare Erkennungsmodul A (Fig. 2) zugleich die Funktion eines Beschleunigungs- und oder Neigungssensors, kann diese verifizieren bzw. ergänzen, um eineindeutig Bewegungsabläufe zu detektieren.

### Bezugszeichenliste

- 13 bis 20, 101,102,112,113,121,122: Verfahrensstufen
- A: Erkennungsmodul
- B: Signalverarbeitungsmodul
- C: Vergleichsmodul
- D: Datenverarbeitungsmodul
- E: Steuermodul
- F: Roboter
- G: externe Sensorik
- H: Signalinterface,Schnittstelle
- a1: Primärmagnetfeldgeber
- a2: Sensor
- a3: Steuerelektronik
- 21: Schwimmbecken
- 22: Einstiegstreppe
- 23,24: Eisenstäbe, Armierung, Bewehrung, magnetische Teile
- 25a, 25b: Säuberungsroboter
- 26, 27: Raupen
- 28: Schmutzwasserabführung
- 29: Stoßfühler
- 30: Baueinheit
- 31: Kabel
- 32: Primärfeldspule
- 33: Sensor, Magnetometer
- 34, 40: Kompensationseinheit
- 35: Gehäuse
- 36: Permanentmagnet
- 37: Rotationsachse
- 38: Elektromotor
- 39: Energiequelle
- 41: Magnetfeldsensor
- 42: Steuerelektronik
- 50: Anordnung zur Robotersteuerung

## Patentansprüche

1. Verfahren zur Steuerung eines Roboters anhand eines Objektes, in dem sich nicht sichtbare magnetische Teile in unveränderlicher Lage befinden, wobei zunächst ein zyklisch veränderliches Primärmagnetfeld erzeugt wird, das zu Messungszwecken innerhalb eines Messungszyklus mindestens zwei entgegengesetzte Feldrichtungen aufweist und das zusammen mit einem magnetischen Hintergrundfeld auf die magnetischen Teile einwirkt und in diesen magnetische Streufelder erzeugt, die sich zu einem Gesamtstreufeld überlagern, **dadurch gekennzeichnet, dass**
danach dieses Gesamtstreufeld vom Hintergrundfeld durch Differenzbildung separiert und ausgewertet wird,
dass weiterhin die magnetischen Teile detektiert und hinsichtlich ihrer Anzahl, Form, Größe, Lage und Orientierung vermessen werden und
dass schließlich die so gewonnenen Messwerte analysiert, die Steuerdaten für den Roboter ermittelt und dem Roboter mitgeteilt werden.

2. Verfahren gemäß Anspruch 1, **dadurch gekennzeichnet, dass** die Analyse der Messwerte einen Vergleich der gewonnenen Messwerte mit vorgegebenen Soll-Messwerten umfasst.

3. Verfahren gemäß Anspruch 1, **dadurch gekennzeichnet, dass** das Hintergrundfeld zur Gewinnung einer Kompassfunktion und zur Erkennung von seitlichen, horizontalen und vertikalen Verkippungen ausgewertet wird, die in die Analyse der Messwerte einbezogen werden.

4. Verfahren gemäß Anspruch 1, **dadurch gekennzeichnet, dass** zusätzliche Steuersignale in die Analyse der Messwerte einbezogen werden.

5. Anordnung zur Durchführung des Verfahrens gemäß den Ansprüchen 1 bis 4, wobei der Roboter mit mindestens einem Primärmagnetfeldgeber fest verbunden ist, in dessen Magnetfeld sich die magnetischen Teile befinden und zur Erzeugung von magnetischen Streufeldern angeregt werden, und wobei
der Roboter weiterhin mit mindestens einem magnetischen Sensor zur Aufnahme der Streufeldsignale und mindestens einer Steuereinheit zur Ansteuerung von Primärmagnetfeldgeber und Sensor fest verbunden ist, **dadurch gekennzeichnet, dass**
dem Roboter nacheinander zugeordnet sind:
ein Signalverarbeitungsmodul für die Separierung der Streufelder von den Hintergrundfeldern sowie für die Detektion und Vermessung der magnetischen Teile,
ein Vergleichsmodul, zur Auswertung und zum Soll-Ist-Vergleich von Streufeldsignalen und/oder Hintergrundfeldsignalen und/oder externen Sensorsignalen zur Ortung und Orientierungsbestimmung, ein Datenverarbeitungsmodul zur Generierung von Daten für die Robotersteuerung aus den Ortungs- und Orientierungsdaten und
ein Steuermodul zur Initiierung der Roboteraktionen entsprechend den Daten aus dem Datenverarbeitungsmodul.

6. Anordnung gemäß Anspruch 5, **dadurch gekennzeichnet, dass** die Steuereinheit mit dem Primärmagnetfeldgeber und dem Sensor in einer Erkennungseinheit zusammengefasst ist und mit dem Roboter eine Baueinheit bildet.

7. Anordnung gemäß Anspruch 5, **dadurch gekennzeichnet, dass** eine Schnittstelle vorgesehen ist, über welche das Signalverarbeitungsmodul und/oder das Vergleichsmodul und/oder das Datenverarbeitungsmodul und/oder das Steuermodul mit einer externen Sensorik verbunden ist.

8. Anordnung gemäß Anspruch 5, **dadurch gekennzeichnet, dass** das Vergleichsmodul einen Mapspeicher mit den Sollwerten des Streufeldes, des Hintergrundfeldes und/oder der externen Sensorik enthält.

9. Anordnung gemäß Anspruch 5 oder 6, **dadurch gekennzeichnet, dass** die mit dem Roboter fest verbundenen magnetischen Sensoren an diesem bezüglich einer definierten Achse paarweise gegenüberliegend oder symmetrisch zu einem definierten Punkt des Roboters angeordnet sind.

10. Anordnung gemäß Anspruch 5, **dadurch gekennzeichnet, dass** der Primärmagnetfeldgeber so ausgestaltet ist, dass die Änderung des Primärmagnetfeldes in Richtung und oder Betrag schrittweise erfolgt.

## Claims

1. A method for controlling a robot on the basis of an object, wherein non-visible magnetic parts are unchangeably positioned, said method comprising the steps of first generating a cyclically variable primary magnetic field, which for measurement purposes has at least two opposite field directions within one measurement cycle and which, together with a magnetic background field, acts on the magnetic parts and generates magnetic scatter fields within them, which scatter fields overlap to form a total scatter field, **characterised in that**
said total scatter field is subsequently separated from the background field by subtraction and evaluated,
further **in that** the magnetic parts are detected and measured in terms of their number, shape, size, position and orientation,
and,
finally, **in that** the measurement values thus obtained are analysed, the control data for the robot is determined and transmitted to the robot.

2. Method according to claim 1, **characterised in that** the analysis of the measurement values comprises a comparison of the obtained measurement values with predetermined target measurement values.

3. Method according to claim 1, **characterised in that** the background field is evaluated in order to obtain a compass function and to detect lateral, horizontal and vertical tilts which are included in the analysis of the measurement values.

4. Method according to claim 1, **characterised in that** additional control signals are included in the analysis of the measurement values.

5. Arrangement for carrying out the method according to claims 1 to 4, wherein the robot is firmly connected to at least one primary magnetic field generator in whose magnetic field the magnetic parts are located and are excited in order to generate magnetic scatter fields, and wherein
the robot is further firmly connected to at least one magnetic sensor for recording the scatter field signals and at least one control unit for controlling the primary magnetic field generator and the sensor, **characterised in that** the robot has assigned to it, in sequence:
a signal processing module for separating the scatter fields from the background fields as well as for the detection and measurement of the magnetic parts,
a comparison module for evaluation and for target value/actual value comparison of scatter field signals and/or background field signals and/or external sensor signals for position finding and orientation,
a data processing module for generating data for robot control on the basis of the position-finding and orientation data, and
a control module for initiating robot actions corresponding to the data from the data processing module.

6. Arrangement according to claim 5, **characterised in that** the control unit is combined with the primary magnetic field generator and the sensor in a detection unit and forms an assembly with the robot.

7. Arrangement according to claim 5, **characterised in that** an interface is provided via which the signal processing module and/or the comparison module and/or the data processing module and/or the control module is connected to an external sensor system.

8. Arrangement according to claim 5, **characterised in that** the comparison module includes a map memory with the target values of the scatter field, of the background field and/or of the external sensor system.

9. Arrangement according to claim 5 or 6, **characterised in that** the magnetic sensors which are firmly connected to the robot are arranged thereon in opposite pairs with respect to a defined axis or symmetrically to a defined point of the robot.

10. Arrangement according to claim 5, **characterised in that** the primary magnetic field generator is designed such that the change in direction and/or amount of the primary magnetic field occurs gradually.

## Revendications

1. Procédé de commande d'un robot à l'aide d'un objet, dans lequel objet des éléments magnétiques non visibles se trouvent dans une position non modifiable, ledit procédé comprenant les étapes de générer d'abord un champ magnétique primaire qui change cycliquement, qui présente à des fins de mesure au moins deux directions de champ opposées au bout d'un cycle de mesure et qui agit conjointement avec un champ magnétique de fond sur les éléments magnétiques et y génère des champs magnétiques de diffusion qui se superposent en un champ de diffusion d'ensemble, **caractérisé en ce que**
l'on sépare ensuite ce champ de diffusion d'ensemble du champ de fond par soustraction et on l'évalue,
**en ce que** l'on détecte alors les éléments magnétiques et on mesure leur nombre, forme, taille, position et orientation, et
**en ce que** l'on analyse enfin les valeurs de mesure ainsi acquises et on détermine les données de commande pour le robot que l'on transmet au robot.

2. Procédé selon la revendication 1, **caractérisé en ce que** l'analyse des valeurs de mesure comprend une comparaison des valeurs de mesure acquises avec des valeurs de mesure de consigne prédéterminées.

3. Procédé selon la revendication 1, **caractérisé en ce que** l'on évalue le champ de fond afin d'obtenir une fonction de compas et afin de détecter des basculements latéraux, horizontaux et verticaux que l'on intègre dans l'analyse des valeurs de mesure.

4. Procédé selon la revendication 1, **caractérisé en ce que** l'on intègre, dans l'analyse des valeurs de mesure, des signaux de commande additionnels.

5. Système pour la mise en oeuvre du procédé selon les revendications 1 à 4, dans lequel le robot est fermement relié avec au moins un générateur de champ magnétique primaire, dans le champ magnétique duquel se trouvent les éléments magnétiques, qui y sont excités afin de générer des champs magnétiques de diffusion, et dans lequel
le robot est en plus fermement relié avec au moins un capteur magnétique destiné à enregistrer les signaux du champ de diffusion et avec au moins une unité de commande destinée à commander le générateur de champ magnétique primaire et ledit capteur, **caractérisé en ce que** l'on affecte au robot, de manière consécutive:
un module de traitement de signaux destiné à séparer les champs de diffusion des champs de fond ainsi qu'à détecter et mesurer les éléments magnétiques,
un module de comparaison pour l'évaluation et la comparaison valeur de consigne/valeur réelle de signaux de champ de diffusion et/ou de signaux de champ de fond et/ou de signaux de capteurs extérieurs pour effectuer une localisation et une orientation,
un module de traitement de données destiné à générer des données de commande pour le robot à partir des données de localisation et d'orientation, et
un module de commande destiné à initier des actions du robot selon les données du module de traitement de données.

6. Système selon la revendication 5, **caractérisé en ce que** l'unité de commande est combinée avec le générateur de champ magnétique primaire et avec le capteur dans une unité de détection, et elle constitue un ensemble avec le robot.

7. Système selon la revendication 5, **caractérisé en ce que** l'on prévoit une interface qui relie le module de traitement de signaux et/ou le module de comparaison et/ou le module de traitement de données et/ou le module de commande avec un système de capteurs extérieurs.

8. Système selon la revendication 5, **caractérisé en ce que** le module de comparaison comprend une mémoire de map contenant les valeurs de consigne du champ de diffusion, du champ de fond et/ou du système de capteurs extérieurs.

9. Système selon la revendication 5 ou 6, **caractérisé en ce que** les capteurs magnétiques fermement reliés avec le robot sont disposés sur celui-ci en paires opposées par rapport à un axe défini ou de manière symétrique par rapport à un point défini du robot.

10. Système selon la revendication 5, **caractérisé en ce que** le générateur de champ magnétique primaire est réalisé de manière à effectuer une modification pas à pas de la direction et/ou de la somme du champ magnétique primaire.
